# EUROPEAN PATENT APPLICATION

(11) **EP 4 821 349 A1**
(43) Date of publication of application: **14.10.2026**
(21) Application number: 24901208.9
(22) Date of filing: 06.12.2024
(51) Int. Cl.: A01K 1/02

(54) **CARRIER**

(30) Priority: 07.12.2023 CN 202311679904; 18.03.2024 CN 202410311902; 11.04.2024 CN 202410437167
(71) Applicant: Jani International Pte. Ltd., Singapore 569874 (SG)
(72) Inventor: YU, Xiong, Singapore 569874 (SG); CHEN, Yingzhong, Singapore 569874 (SG); GUO, Zhengwen, Singapore 569874 (SG)
(74) Representative: Pfenning, Meinig & Partner mbB
(86) International application number: PCT/SG2024/050779
(87) International publication number: WO 2025/122065

(57) **Abstract**

The present invention provides a carrier. The carrier comprises a housing, wherein the housing comprises a body and a bottom support member. The body covers the bottom support member. The body comprises a first support member and a second support member which are connected to each other, and an anti-collision support structure is provided at the joint of the first support member and the second support member.

## Description

### TECHNICAL FIELD

The present disclosure relates to a carrier, more specifically, to a carrier provided with a supporting structure.

### BACKGROUND

In recent years, an increasing number of users have been employing pet carriers such as pet baskets or pet crates to transport their pets during travel, to enhance safety of the pets in a moving vehicle. To further improve stability of the carriers placed inside the vehicle, especially large-size carriers designed for big pets (e.g., large-size carry cot), the user may secure the carrier to a vehicle seat. However, since a large amount of structures (e.g., a top cover, side panels, etc.) of the carrier is made of flexible materials (such as fabric, textiles, or thermal-compressed EVA sheets), they may lack sufficient support, particularly at the junctions between the top cover and the side panels. This can affect the overall structural stability and strength of the box body. In particular, such box body may also exhibit insufficient impact resistance, failing to provide adequate protection for the pets inside thereof.

Furthermore, when these flexible materials forming the box body are connected to each other through flexible connecting devices (such as zippers), the box body itself is flexible, especially at the locations connected with the flexible materials by the zippers, may result in the zippers not pulling smoothly, thereby affecting the user's operating experience.

### SUMMARY

The present disclosure provides a carrier. The carrier comprises a box body. The box body comprises a body and a bottom supporting member. The body is disposed on and covers the bottom supporting member. The body comprises a first supporting member and a second supporting member connected to each other, and a supporting structure is disposed at a connection between the first supporting member and the second supporting member.

In an embodiment, the supporting structure is configured to extend along at least a part of an edge of the first supporting member and protrude outward to abut against the second supporting member when the first supporting member and the second supporting member are connected to each other; or extend along at least a part of an edge of the second supporting member and protrude outward to abut against the first supporting member when the first supporting member and the second supporting member are connected to each other.

In an embodiment, the first supporting member is a side supporting member, forming two side surfaces of the body; and the second supporting member is an upper supporting member, forming at least a part of other two side surfaces and a top surface of the body.

In an embodiment, the supporting structure is at least disposed at a top corner of the side supporting member to abut against the upper supporting member when the side supporting member and the upper supporting member are connected to each other.

In an embodiment, the supporting structure is configured to extend from the top corner of the side supporting member to a lower edge of the side supporting member.

In an embodiment, the supporting structure comprises a supporting protrusion, the supporting protrusion is located at the top corner of the side supporting member. A width of the supporting protrusion is greater than a width of other parts of the supporting structure.

In an embodiment, the supporting structure is integrally formed with the first supporting member and/or the second supporting member.

In an embodiment, the supporting structure comprises a supporting rail, the supporting rail is connected to the first supporting member or the second supporting member, and forms a mounting groove for accommodating a part of the second supporting member or a part of the first supporting member.

In an embodiment, the supporting rail extends along at least a part of a side edge of the first supporting member and a corresponding part of a side edge of the second supporting member.

In an embodiment, the supporting rail comprises a supporting plate and a bending part disposed on the supporting plate, and the mounting groove is formed between the supporting plate and the bending part.

In an embodiment, the supporting rail is fixedly connected to the first supporting member, the side edge of the first supporting member abuts against an outer side of the bending part, and at least a part of the side edge of the second supporting member is inserted into the mounting groove; or the supporting rail is fixedly connected to the second supporting member, the side edge of the second supporting member abuts against an outer side of the bending part, and at least a part of the side edge of the first supporting member is inserted into the mounting groove.

In an embodiment, the first supporting member is a side supporting member, forming two side surfaces of the body. The second supporting member is an upper supporting member, comprising a first sheet-like member, a third sheet-like member, and a second sheet-like member located between the first sheet-like member and the third sheet-like member, which respectively form at least a part of other two side surfaces and a top surface of the body. When the supporting rail is fixedly connected to the side supporting member, a side edge of at least the second sheet-like member of the upper supporting member is inserted into the mounting groove, and a side edge of the side supporting member corresponding to the supporting rail abuts against an outer side of the bending part; or
When the supporting rail is fixedly connected to the upper supporting member, a side edge of the side supporting member at least corresponding to the second sheet-like member is inserted into the mounting groove, and a side edge of at least the second sheet-like member of the upper supporting member abuts against an outer side of the bending part.

In an embodiment, the bending part comprises a longitudinal section and a transverse section, the longitudinal section is configured to extend upward from an upper surface of the supporting plate, and the transverse section is configured to extend at an angle to the longitudinal section from an upper end of the longitudinal section.

In an embodiment, a width of the bending part is less than a width of the supporting plate.

In an embodiment, the bending part and the supporting plate are an integral structure or a separate structure.

In an embodiment, the supporting rail has a cross section in a h shape_{∘}

In an embodiment, the supporting rail is made of a rigid material.

In an embodiment, at least a part of the first supporting member and/or the second supporting member has a three-layer structure composed of a first material layer, a second material layer, and a third material layer. The first material layer and the third material layer are woven fabric, and the second material layer is EVA. Alternatively, at least a part of the first supporting member and/or the second supporting member has a two-layer structure composed of a first material layer and a second material layer, wherein the first material layer is a woven fabric, and the second material layer is EVA.

In an embodiment, the second material layer is formed by thermal-compressing the EVA at a temperature of 70°C to 80°C.

In an embodiment, a top surface of the box body is provided with a handle, and an avoidance recess corresponding to the handle.

In an embodiment, the handle is a flexible handle or a rigid handle.

In an embodiment, the securing strap assembly comprises a first connecting device connected to a vehicle seat or a corresponding anchor position of the vehicle from above the box body, and a second connecting device connected to the vehicle seat from below the box body. The storage space comprises a first storage groove and a second storage groove. The first storage groove is configured to accommodate the second connecting device, and the second storage groove is configured to accommodate the first connecting device.

In an embodiment, the first connecting device is a Top Tether connecting member, and the second connecting device is a LATCH connecting member.

In an embodiment, the bottom supporting member comprises a bottom cover and a supporting base plate disposed on the bottom cover. The bottom cover is provided with a first storage cover and a second storage cover that may be opened and closed. The first storage cover is configured to shield the first storage groove, and the second storage cover is configured to shield the second storage groove.

In an embodiment, the bottom supporting member comprises a bottom cover. The bottom cover has a two-layer structure composed of a first material layer and a second material layer. The first material layer is a woven fabric, and the second material layer is EVA.

In addition, the present disclosure further provides a carrier. The carrier comprises a body and a bottom supporting member. The body is connected to the bottom supporting member to form a box body for providing an accommodating space. The body comprises a side supporting member and an upper supporting member connected to each other. A supporting structure is disposed at a connection of the side supporting member and the upper supporting member. The supporting structure extends along at least a part of an edge of the side supporting member and protrudes towards the upper supporting member. A width of the supporting structure at a top of the body is equal to a width of the supporting structure at the two sides of the body.

In an embodiment, the supporting structure is provided with an accommodating groove for accommodating at least a part of a side edge of the upper supporting member.

### BRIEF DESCRIPTION OF THE DRAWINGS

The drawings are included herein to provide a further understanding of the present disclosure and are incorporated into this specification, and form a part of this specification. The drawings illustrate the embodiments of the present disclosure, and are used to explain the concepts of the present disclosure together with the description in the following.
FIG. 1 shows a perspective view of a carrier according to a first embodiment of the present disclosure.
FIG. 2 shows a perspective view of a body of the box body in FIG. 1 in another state.
FIG. 3A shows a perspective view of a side supporting member of the body in FIG. 2.
FIG. 3B shows a cross-sectional view taken along a line A-A in FIG. 3A.
FIG. 4 shows a bottom perspective view of the carrier according to the first embodiment of the present disclosure.
FIG. 5 shows a perspective view of the carrier in FIG. 4 in another state.
FIG. 6A and FIG. 6B show a composed structural of the bottom supporting member.
FIG. 7 shows a perspective view of a carrier according to a second embodiment of the present disclosure.
FIG. 8 shows a perspective view of a supporting structure according to the second embodiment of the present disclosure.
FIG. 9 shows a cross-sectional view of the carrier taken along a line B-B in FIG. 7 and its enlarged partial view.
FIG. 10 shows another enlarged partial cross-sectional view of the supporting structure in FIG. 9.
FIG. 11A and FIG. 11B show schematic views that the supporting structure according to the second embodiment of the present disclosure and the upper supporting member are in disconnected and connected states.
FIG. 11C shows a perspective view of the supporting structure in FIG. 11A.
FIG. 12 shows a perspective view of a carrier according to the third embodiment of the present disclosure.
FIG. 13 shows another perspective view of the carrier in FIG. 12, in which a part of a second closure member is separated from the body.
FIG. 14 shows a perspective view of a carrier according to the fourth embodiment of the present disclosure.
FIG. 15 shows a perspective view of the body of the carrier in FIG. 14 in another state.

### Reference numbers are listed as follows:

| | |
|---|---|
| carrier | 1 |
| box body | 100 |
| first connecting assembly | 101 |
| second connecting assembly | 102 |
| third connecting member | 1021 |
| fourth connecting member | 1022 |
| body | 110 |
| side supporting member | 111 |
| first material layer | 111a |
| second material layer | 111b |
| third material layer | 111c |
| upper supporting member | 112 |
| first sheet-like member | 1121 |
| second sheet-like member | 1122 |
| third sheet-like member | 1123 |
| avoidance recess | 1124 |
| anti-collision supporting structure | 113 |
| supporting protrusion | 1131 |
| handle | 115 |
| first window | 116 |
| second window | 117 |
| bottom supporting member | 120 |
| first storage groove | 121 |
| supporting leg | 123 |
| supporting leg mounting groove | 128 |
| bottom cover | 140 |
| first material layer | 140a |
| second material layer | 140b |
| first storage cover | 141 |
| second storage cover | 142 |
| carrier | 2 |
| box body | 200 |
| second connecting assembly | 202 |
| third connecting member | 2021 |
| fourth connecting member | 2022 |
| body | 210 |
| side supporting member | 211 |
| first sub-supporting member | 2111 |
| second sub-supporting member | 2112 |
| upper supporting member | 212 |
| first sheet-like member | 2121 |
| second sheet-like member | 2122 |
| third sheet-like member | 2123 |
| supporting structure | 213 |
| mounting groove | 213a |
| supporting rail | 2131 |
| supporting plate | 2132 |
| bending part | 2133 |
| longitudinal section | 2133a |
| transverse section | 2133b |
| first stitching line | X21 |
| second stitching line | X22 |
| securing strap assembly | 300 |
| first connecting device | 310 |
| second connecting device | 320 |
| carrier | G1100, G1100A |
| body | G1110, G1110A |
| side supporting member | G1111, G1111A |
| upper supporting member | G1112, G1112A |
| first sheet-like member | G1112Aa |
| second sheet-like member | G1112Ab |
| third sheet-like member | G1112Ac |
| third connecting member | G1113A |
| fourth connecting member | G1114A |
| anti-collision supporting structure | G1115A |
| accommodating groove | G1115Aa |
| first window | G1116 |
| first closure member | G1116a |
| second window | G1117 |
| second closure member | G1117a |
| bottom supporting member | G1120, G1120A |
| body covering member | G1130 |
| bottom covering member | G1140 |
| first connecting assembly | G1150 |
| second connecting assembly | G1160, G1160A |

### DETAILED DESCRIPTION

Hereinafter, the exemplary embodiments of the present disclosure will be described in detail with reference to the accompanying drawings. Although the present disclosure is susceptible to various modifications and alternative forms, specific embodiments are shown by way of examples in the drawings and will be described in detail herein. However, the present disclosure should not be construed as being limited to the embodiments set forth herein. On the contrary, the present disclosure covers all modifications, equivalents, and alternatives falling within the spirit and scope of the present disclosure.

The present disclosure will now be described in detail with reference to the accompanying drawings.

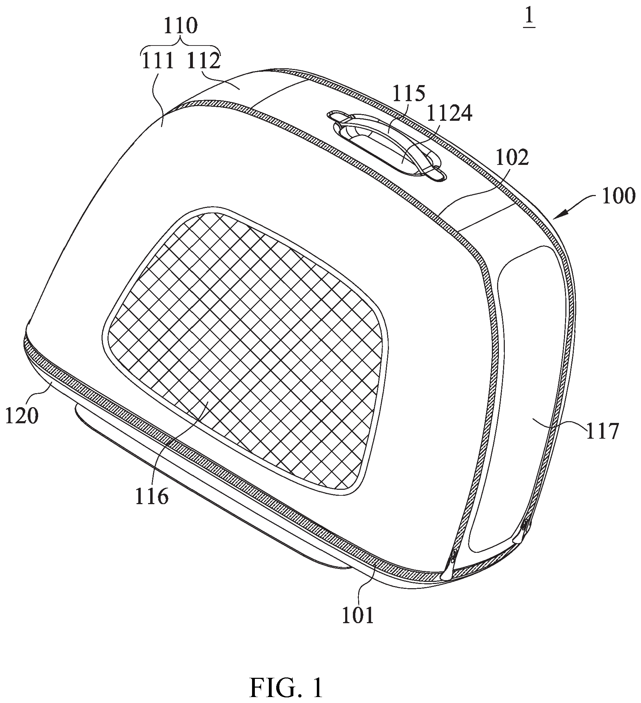

A first embodiment of the present disclosure provides a carrier 1 that may be secured to a vehicle seat via a securing strap assembly to safely accommodate a pet therein. Specifically, FIG. 1 shows a perspective view of the carrier 1 according to the first embodiment of the present disclosure.

As shown in FIG. 1, the carrier 1 comprises a box body 100, which provides a space for accommodating pets (especially large-size pets, such as large-size dogs). The box body 100 comprises a body 110 and a bottom supporting member 120. The body 110 constitutes the four side surfaces and a top surface of the box body 100, and the bottom supporting member 120 constitutes a bottom of the box body 100. The body 110 is connected to the bottom supporting member 120, for example, detachably disposed on, covers and connected above the bottom supporting member 120. Specifically, the body 110 may be detachably connected to the bottom supporting member 120 via a first connecting assembly 101. In an example, the first connecting assembly 101 may comprise a first connecting member on the body 110 and a second connecting member on the bottom supporting member 120 corresponding to the first connecting member, and the first connecting member and the second connecting member are detachably connected to each other to achieve the connection and separation of the body 110 and the bottom supporting member 120. The first connecting assembly 101 of the present disclosure (i.e., the first connecting member and/or the second connecting member) may be a flexible structure or a rigid structure, such as a zipper structure, a snap-fit structure, a slide buckle structure, Velcro, a hook-and-loop structure, etc., but the present disclosure is not limited thereto.

For example, in this embodiment, the first connecting member and the second connecting member of the first connecting assembly 101 may be formed as the zipper structure. Specifically, the first connecting member may be provided at a bottom edge of the body 110, for example, extending along at least a part of the bottom edge. Optionally, the first connecting member may be configured to extend along an entire bottom edge. The second connecting member is disposed at an upper edge of the bottom supporting member 120, corresponding to the first connecting member. That is, the second connecting member may be configured to extend along at least a part of the upper edge of the bottom supporting member 120. In other examples, the first connecting member may be disposed at a peripheral wall of the body 110, and/or the second connecting member may be disposed at a peripheral wall of the bottom supporting member 120, but the present disclosure is not limited thereto.

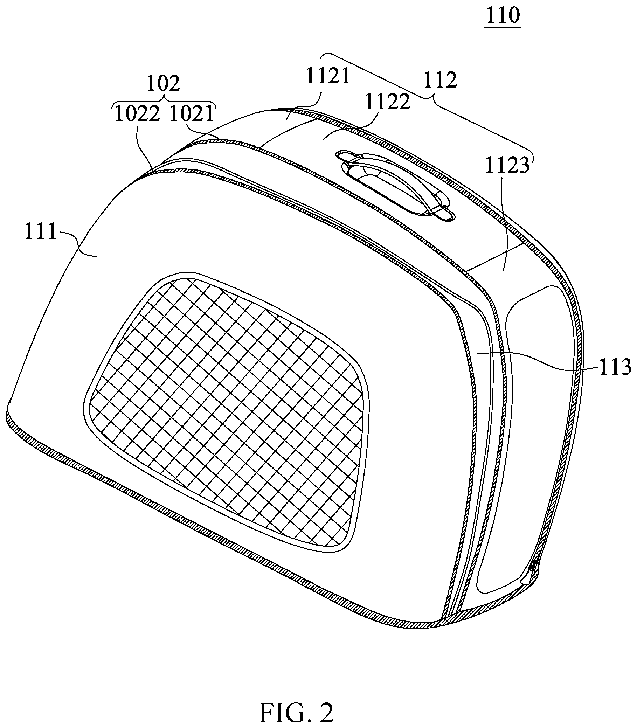

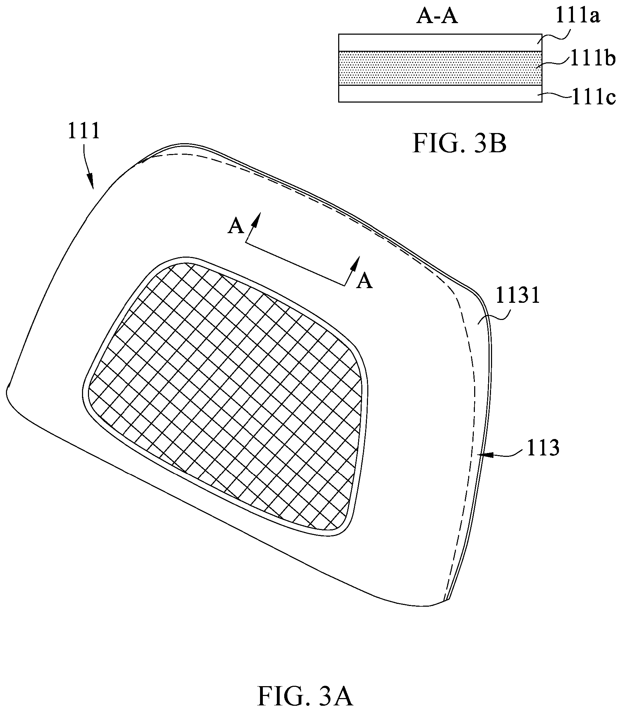

Further, FIG. 2 shows the body 110 of the box body 100 of the carrier 1 shown in FIG. 1, where the side supporting member 111 on a side of the body 110 is in a separated state from the upper supporting member 112; FIG. 3A shows a perspective view of the side supporting member 111 of the body 110 shown in FIG. 2; and FIG. 3B shows a cross-sectional view taken along a line A-A in FIG. 3A to show an internal structure of the side supporting member 111.

Referring to FIG. 1 and FIG. 2 in combination, the body 110 may comprise a first supporting member and a second supporting member that are connected to each other. In this embodiment, the first supporting member may be a side supporting member 111, forming two side surfaces of the body 110, for example, a front side surface and a back side surface shown in the figure; while the second supporting member may be an upper supporting member 112, forming at least a part of other two side surfaces and the top surface of the body 110, for example, left and right side surfaces shown in FIG. 1.

The side supporting member 111 and the upper supporting member 112 may be detachably connected to each other via a second connecting assembly 102. In an example, the second connecting assembly 102 may comprise a third connecting member 1021 and a fourth connecting member 1022 that are detachably connected to each other. The third connecting member 1021 is disposed on the upper supporting member 112, and the fourth connecting member 1022 is disposed on the side supporting member 111. Specifically, the third connecting member 1021 may be disposed on a side of the upper supporting member 112, for example, extends along at least a part of the side of the upper supporting member 112; while the fourth connecting member 1022 may be correspondingly provided at a top edge of the side supporting member 111, for example, extends along at least a part of the top edge of the side supporting member 111, to correspond to the third connecting member 1021. The third connecting member 1021 and/or the fourth connecting member 1022 of the second connecting assembly 102 have a flexible structure or a rigid structure. For example, in this embodiment, the second connecting assembly 102 may be a cooperating zipper structure. However, the present disclosure is not limited thereto, and the second connecting assembly 102 may also be a snap-fit structure, a slide buckle structure, Velcro, a hook-and-loop structure, etc.

In this embodiment, the side supporting member 111 may be composed of two sub-supporting members, which are connected to two sides of the upper supporting member 112 respectively via the second connecting assembly 102. In an example, the two sub-supporting members of the side supporting member 111 may be connected to each other via a connecting structure (for example, a connecting plate or connecting strip disposed at a lower end of the side supporting member 111), so as to prevent them from being separated when being folded. In other examples, the side supporting member 111 may also be an integral structure, that is, surrounding the upper supporting member 112, but the present disclosure is not limited thereto.

Furthermore, as shown in FIG. 1 and FIG. 2, the upper supporting member 112 may comprise three sheet-like members that are connected to each other and form an arch when connected to the side supporting member 111. Specifically, the upper supporting member 112 may comprise a first sheet-like member 1121, a second sheet-like member 1122, and a third sheet-like member 1123. The first sheet-like member 1121 and the third sheet-like member 1123 form at least a part of the other two side surfaces of the body 110, and the second sheet-like member 1122 forms the top surface of the body 110. In an example, the first sheet-like member 1121, the second sheet-like member 1122 and the third sheet-like member 1123 are fixedly connected to each other by stitching or other means.

In addition, the box body 100 may be provided with a handle 115 for users to carry and move the carrier 1. In an example, the handle 115 may be fixedly connected to the top surface of the box body 100, either in a detachable or non-detachable manner. For example, the handle 115 may be fixedly connected to the top surface of the box body 100, i.e., the second sheet-like member 1122 of the upper supporting member 112, by stitching. The handle 115 may be a flexible handle, made of flexible materials such as woven straps, PU straps, cloth straps, ropes, etc. Optionally or alternatively, the handle 115 may be a rigid handle, made of rigid materials such as hard plastic, etc. Certainly, the present disclosure is not limited to the aforementioned materials, and the handle 115 may also comprise both flexible and rigid materials.

Optionally, the top surface of the box body 100 (i.e., the second sheet-like member 1122 of the upper supporting member 112) is also provided with an avoidance recess 1124, which is located below the handle 115 and corresponds to a position of the handle 115. When a user lifts the carrier 1 by grasping the handle 115, the avoidance recess 1124 may provide a space for the user's hand, preventing the user from having difficulty in lifting the carrier 1 due to that the top of the handle 115 is distanced close to the box body 100, or even causing the user's hand to be pinched between the handle 115 and the box body 100, thereby enhancing user comfort and experience.

In addition, as shown in FIG. 1, one or more side surfaces of the body 110 may also be provided with windows, for example, a first window 116 for observing the pet inside the box body 100 and/or a second window 117 for providing an opening through which the pet enters and exits the box body 100. Specifically, in this embodiment, the first window 116 may be disposed on the side supporting member 111 at any side or both sides of the box body 100, and the second window 117 may be disposed on the upper supporting member 112 (for example, on the first sheet-like member 1121 and/or the third sheet-like member 1123 located on the other two sides of the box body 100), but the present disclosure is not limited thereto. The positions and/or functions of the first window 116 and the second window 117 may be interchangeable or used in combination.

Optionally, the first window 116 and the second window 117 may respectively be provided with a first closure member and a second closure member to close and/or shield the first window 116 and the second window 117. In an example, the first closure member may be a first window cloth (such as breathable mesh fabric, etc.) covering the first window 116; and/or the second closure member may be a second window cloth (such as mesh fabric, anti-collision pad, etc.) covering the second window 117. Specifically, the first window cloth may be fixedly connected to the first window 116 by stitching or other means, that is, the first window cloth may not be separated from the first window 116, but the present disclosure is not limited thereto. The first window cloth may also be designed to have a part detachably connected to the first window 116 to allow the pet to enter and exit.

As shown in FIG. 2 and FIG. 3, the body 110 may also be provided with anti-collision supporting structure 113 (also referred to as a "supporting structure"), for example, at a connection of the first supporting member and the second supporting member. Specifically, the anti-collision supporting structure 113 may be disposed at an edge of the first supporting member and/or an edge of the second supporting member. In an example, the anti-collision supporting structure 113 is configured to extend along at least a part of the edge of the first supporting member and protrude outward to abut against the second supporting member when the first supporting member and the second supporting member are connected to each other. It should be noted that when the first supporting member and the second supporting member are connected to each other through the second connecting assembly 102, the anti-collision supporting structure 113 is located on an inner side of the second connecting assembly 102, so as to be able to abut against the second supporting member on the inner side of the box body 100.

In this embodiment, as shown in FIG. 1 to FIG. 3, as an example of that the first supporting member is the side supporting member 111 and the second supporting member is the upper supporting member 112, the anti-collision supporting structure 113 is disposed at least at the top corner of the side supporting member 111 to abut against the upper supporting member 112 when the side supporting member 111 and the upper supporting member 112 are connected to each other. In an example, the anti-collision supporting structure 113 may be disposed at the top corner of the side supporting member 111, specifically at the two top corners of the side supporting members 111 (i.e., the sub-supporting members) on both sides of the box body 100, that is, at four top corners of the box body 100, in order to enhance the structural stability of the top corners of the box body 100, so that the box body 100 can provide better anti-collision performance when subjected to impact, thereby better protecting the pet carried inside the box body 100.

Further, the anti-collision supporting structure 113 is configured to extend from the top corner of the side supporting member 111 to a lower edge of the side supporting member 111, thereby not only enhancing the anti-collision performance at the sides of the box body 100, but also further strengthening the structural strength at the top corner of the box body 100 to achieve better anti-collision effects.

By providing such an anti-collision supporting structure 113, when the side supporting member 111 and the upper supporting member 112 are connected to each other, the anti-collision supporting structure 113 disposed on the side supporting member 111 may abut against the upper supporting member 112 from the inside of the box body 100, so that when the carrier 1 is subjected to impact, the anti-collision performance of the box body 100 can be improved, the deformation after impact can be reduced, and the anti-collision performance can be enhanced. In addition, the anti-collision supporting structure 113 may also provide support for an entire box body 100, to prevent an appearance of the box body 100 (especially the four top corners) from being collapsed, so as to make the box body 100 more aesthetic and high quality. Moreover, since the anti-collision supporting structure 113 may provide support for the side edges of the box body 100, zippers disposed at or near the side edges will not be bent or curved to be pulled smoothly, thereby enhancing the user's operational experience.

As shown in FIG. 3, the anti-collision supporting structure 113 may comprise a supporting protrusion 1131, which is located at the top corner of the side supporting member 111. Specifically, a width of the supporting protrusion 1131 is greater than that of other parts of the anti-collision supporting structure 113, that is, an outer edge of the supporting protrusion 1131 is farther from an upper edge of the side supporting member 111 (or a fourth connecting member 1022 disposed at the upper edge of the side supporting member 111) than the other parts of the anti-collision supporting structure 113. By providing the supporting protrusion 1131, it can better abut against a curved portion of the upper supporting member 112, thereby further enhancing the anti-collision performance at the top corner of the box body 100.

In another example, the anti-collision supporting structure 113 may be configured to extend along at least a part of the edge of the second supporting member (e.g., the upper supporting member 112) and protrude outward to abut against the first supporting member (e.g., the side supporting member 111) when the first supporting member and the second supporting member are connected to each other. Optionally or alternatively, the anti-collision supporting structure 113 may also be alternately disposed at the edges of the first supporting member and the second supporting member, or may be disposed at other positions of the first supporting member and/or the second supporting member. Certainly, the anti-collision supporting structure 113 of the present disclosure is not limited to the aforementioned positions and structures, but detailed description thereof will be omitted herein.

Optionally, the anti-collision supporting structure 113 may be integrally formed with the first supporting member and/or the second supporting member to facilitate manufacturing and provide great strength as well as strong collision and impact resistance performance. However, the present disclosure is not limited thereto, and the anti-collision supporting structure 113 may also be fixedly connected to the first supporting member and/or the second supporting member by stitching or other means.

In an example, as shown in FIG. 3A and FIG. 3B, the side supporting member 111 may have a three-layer structure, that is, a first material layer 111a, a second material layer 111b, and a third material layer 111c in sequence. Optionally, the first material layer 111a and the third material layer 111c may be made of woven fabric, but the present disclosure is not limited thereto. They may also be made of other fabrics or leather materials, such as knitted fabric, cloth fabric, PU, PVC, etc. The second material layer 111b may be made of EVA (ethylene-vinyl acetate copolymer), specifically formed by thermal-compressing the EVA at a temperature of 70°C to 80°C.

More specifically, the EVA (i.e., the second material layer 111b) in the middle may first be adhered to an outer first material layer 111a (or an inner third material layer 111c), such as woven fabric. Then, the EVA may be thermally compressed at a temperature of around 70°C to 80°C to compact it onto the woven fabric of the first material layer 111a (or the third material layer 111c). Subsequently, the woven fabric of the third material layer 111c (or the first material layer 111a) may be adhered to the EVA to completely encapsulate the EVA between the two material layers without being exposed. The side supporting member 111 formed in the above manner not only has a certain degree of rigidity to ensure sufficient strength but also has a certain degree of flexibility, good cushioning properties, and excellent anti-collision effects, and is also convenient to be secured by stitching. Finally, the outer edge of the side supporting member 111 may be hemmed to prevent cut edges of the EVA and woven fabric from being exposed, thereby preventing fraying and enhancing the aesthetic appearance.

In another example, the side supporting member 111 may have a two-layer structure, that is, a first material layer 111a and a second material layer 111b from the outside to the inside. Optionally, the first material layer 111a may be made of woven fabric, but the present disclosure is not limited thereto. It may also be made of other fabrics or leather materials, such as knitted fabric, cloth fabric, PU, PVC, etc. The second material layer 111b may be made of EVA, specifically formed by thermally compressing the EVA at a temperature of 70°C to 80°C, for example, directly formed on the first material layer 111a.

The anti-collision supporting structure 113 disposed on the side supporting member 111 may have the same structure as the side supporting member 111, that is, the aforementioned three-layer structure or two-layer structure. Optionally, the anti-collision supporting structure 113 may be integrally formed with the side supporting member 111 in the above-mentioned three-layer structure or two-layer structure to provide great strength and strong collision and impact resistance performance.

In addition, at least a part of the upper supporting member 112 (i.e., the second supporting member), for example, the second sheet-like member 1122, may have a three-layer structure composed of a first material layer, a second material layer, and a third material layer, or a two-layer structure composed of a first material layer and a second material layer. The materials of the three-layer structure or two-layer structure of the second sheet-like member 1122 may be similar to those of the aforementioned side supporting member 111, and detailed description thereof will be omitted here. The first sheet-like member 1121 and the third sheet-like member 1123 may be made of the same material as the first material layer, but the present disclosure is not limited thereto.

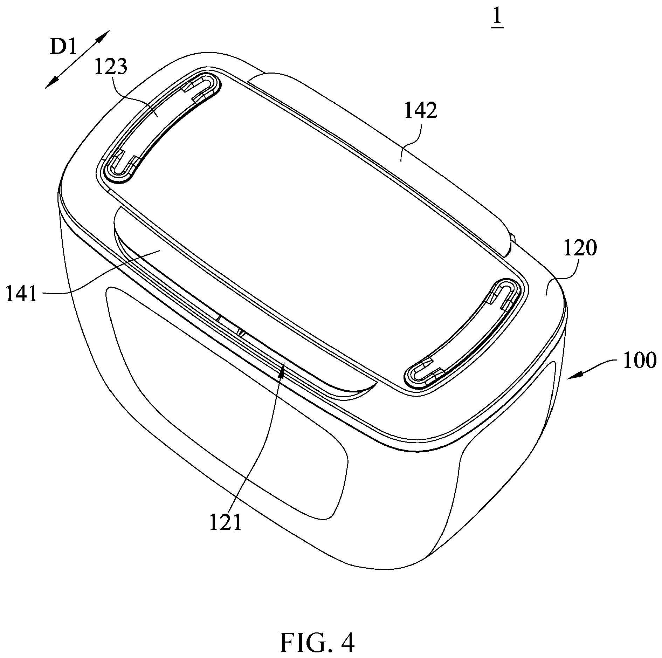

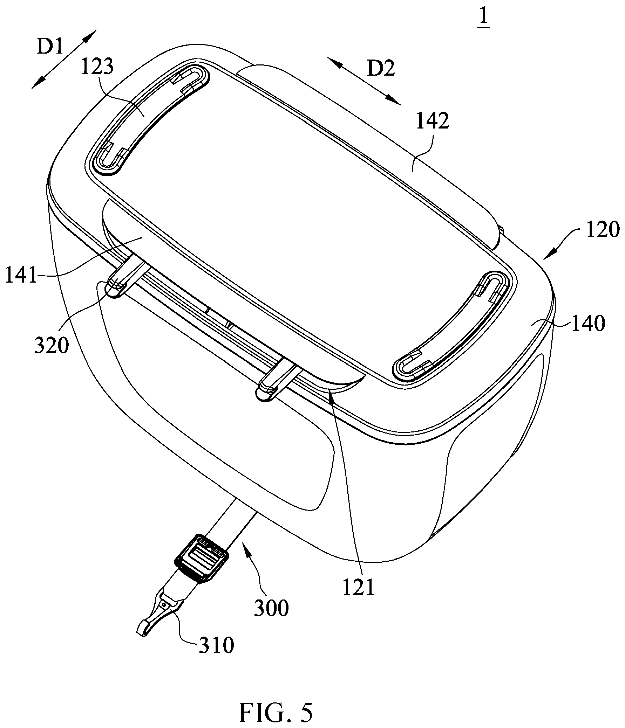

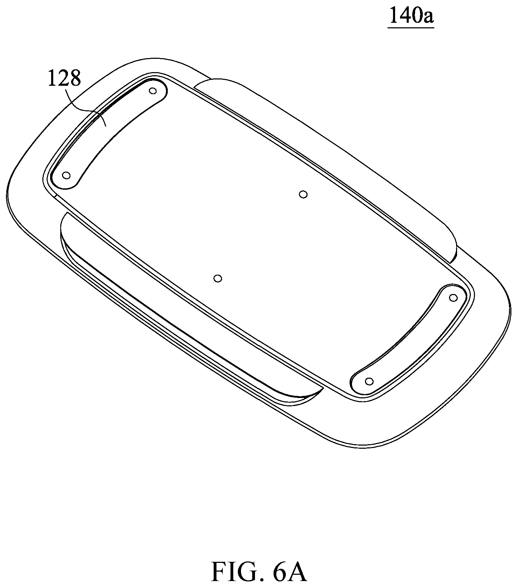

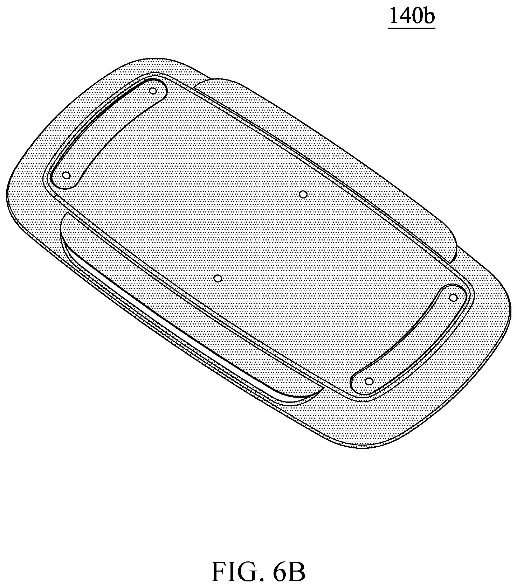

Referring to FIG. 4 to FIG. 6B, FIG. 4 shows a bottom perspective view of the carrier 1 according to the first embodiment of the present disclosure, with the securing strap assembly 300 in a stored state; FIG. 5 shows a perspective view of the carrier 1 in another state, specifically with the securing strap assembly 300 in use; and FIG. 6A and FIG. 6B show the composed structure of the bottom supporting member 120.

As shown in FIG. 4 and FIG. 5, the carrier 1 may further comprise a securing strap assembly 300 for securing the box body 100 to a vehicle seat. The securing strap assembly 300 comprises a strap and a first connecting device 310 and a second connecting device 320 located at both ends of the strap. When the box body 100 is secured to the vehicle seat via the securing strap assembly 300, the first connecting device 310 disposed at one end of the strap is connected to the vehicle seat or the corresponding anchor position of the vehicle from above the box body 100. The strap extends from the side of the box body 100 away from a backrest of the vehicle seat to the bottom of the box body 100, so that the second connecting device 320 disposed at the other end of the strap is connected to the vehicle seat from below the box body 100. In this embodiment, the first connecting device 310 may be a Top Tether connecting member, and the second connecting device 320 may be a LATCH connecting member, but the present disclosure is not limited thereto.

As shown in FIG. 5, the securing strap assembly 300 may be configured to connect with the box body 100 of the carrier 1, and at least a part of the securing strap assembly 300 may be stored in a storage space of the box body 100. In an example, the storage space may be disposed in the bottom supporting member 120 of the box body 100. Specifically, the storage space comprises a first storage groove 121 and a second storage groove (not shown due to being obscured). The first storage groove 121 may be configured to accommodate the second connecting device 320 and a part of the strap connected to the second connecting device 320, optionally. The second storage groove may be configured to accommodate the first connecting device 310 and a part of the strap connected to the first connecting device 310, optionally. In an example, the first storage groove 121 and the second storage groove are disposed on opposite sides of the bottom supporting member 120 along a transverse direction D1 (i.e., its width direction). For example, the first storage groove 121 is disposed on a side where the second connecting device 320 (e.g., the LATCH connecting member) extends out from the carrier 1, that is, on the side close to the backrest of the vehicle seat when the carrier 1 is placed on the vehicle seat, for accommodating the second connecting device 320. The second storage groove is disposed on the opposite side of the first storage groove 121, that is, on a side away from the backrest of the vehicle seat, for accommodating the first connecting device 310 and at least a part of the strap connected thereto. Optionally, the first storage groove 121 and/or the second storage groove may be centrally disposed on a side of the bottom supporting member 120.

As shown in FIG. 4 and FIG. 5, the bottom supporting member 120 may comprise a bottom cover 140 and a supporting base plate provided on the bottom cover 140. The bottom cover 140 may be provided with a first storage cover 141 and a second storage cover 142 that may be opened and closed. Specifically, the first storage cover 141 may be configured to shield for accommodating the second connecting device 320, and the second storage cover 142 may be configured to shield the second storage groove for accommodating the first connecting device 310.

Specifically, referring to FIG. 5, FIG. 6A, and FIG. 6B, the bottom cover 140 may have a two-layer structure, that is, a first material layer 140a and a second material layer 140b from the bottom to the top. In an example, as shown in FIG. 6A, the first material layer 140a is located on an outer layer of the bottom cover 140, a bottom surface of the bottom supporting member 120, and may be made of woven fabric (or other fabrics or leather materials). The second material layer 140b may be made of EVA, specifically formed on the first material layer 140a by thermally compressing the EVA at a temperature of 70°C to 80°C. The supporting base plate (not shown) is disposed inside the bottom cover 140, that is, a side of the second material layer 140b away from the first material layer 140a. In other examples, the bottom cover 140 may also employ a three-layer structure, similar to the three-layer structure of the aforementioned side supporting member 111, which will not be described in detail here.

Referring to FIG. 5 and FIG. 6A, the bottom supporting member 120 is also provided with supporting legs 123. The supporting legs 123 may be disposed at both ends of the bottom supporting member 120 along a longitudinal direction D2. Specifically, the two supporting legs 123 may be symmetrically disposed with respect to a center line of the bottom supporting member 120 in the longitudinal direction D2. In an example, the supporting leg 123 may be a strip-shaped plate-like member, fixedly connected to the bottom supporting member 120 by fasteners or adhesion, and extending substantially along the transverse direction D1 of the bottom supporting member 120. Optionally, the supporting leg 123 may have a curvature to conform to the shape of the edge of the bottom supporting member 120, thereby more stably supporting the box body.

Optionally, as shown in FIG. 6A, the bottom cover 140 may correspondingly be provided with a supporting leg mounting groove 128. The supporting leg 123 may be fixedly connected within the supporting leg mounting groove 128 by screws or the like, so as to be more firmly and stably connected to the bottom supporting member 120. In an example, the supporting leg mounting groove 128 may be formed in the first material layer 140a of the bottom cover 140. Optionally, the second material layer 140b of the bottom cover 140 may also correspondingly form a recess to conform to the shape of the supporting leg mounting groove 128 in the first material layer 140a.

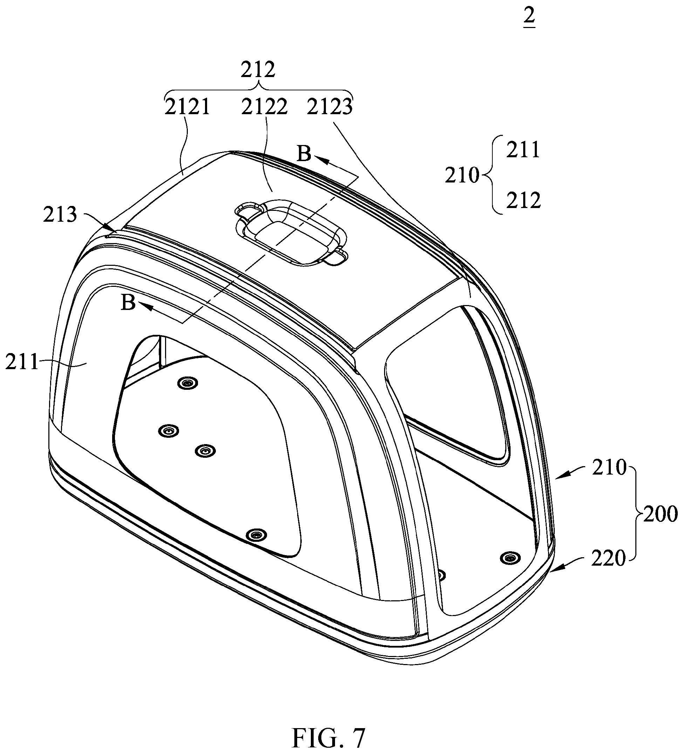

The second embodiment of the present disclosure also provides a carrier 2, which may be secured to a vehicle seat via a securing strap assembly, so that the pet may be seated therein. Specifically, FIG. 7 shows a perspective view of the carrier 2 according to this embodiment, in which some components and structures, for example a part of the seat cloth covering the outside of the body 210, the closure members disposed on the windows, and the second connecting assembly connected between the first supporting member and the second supporting member, of the carrier 2 are removed to more clearly show the structural differences of the box body 200 from the aforementioned embodiment.

As shown in FIG. 7, the carrier 2 of this embodiment may comprise a box body 200, which provides a space for accommodating the pet. The box body 200 comprises a body 210 and a bottom supporting member 220. The body 210 constitutes four side surfaces and a top surface of the box body 200, and the bottom supporting member 220 constitutes a bottom of the box body 200. The body 210 may be detachably mounted and connected to the bottom supporting member 220 via a first connecting assembly, which has a similar structure to the first connecting assembly 101 described in the previous embodiments, for example, comprising a first connecting member and a second connecting member, etc., and detailed description thereof will be omitted here.

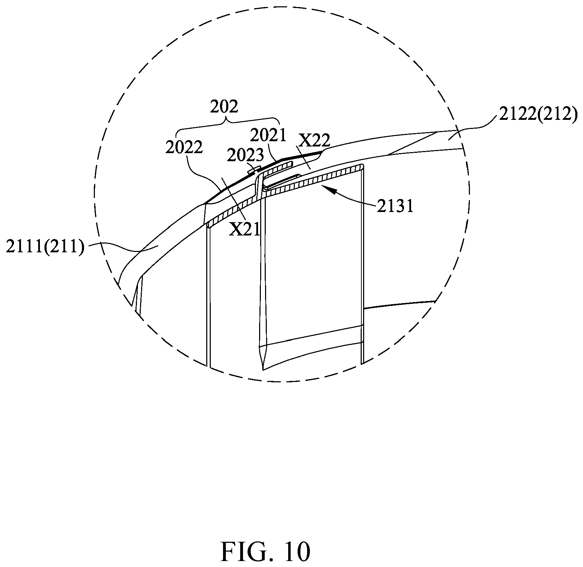

As shown in FIG. 7, the body 210 may comprise a first supporting member and a second supporting member. The first supporting member and the second supporting member may be connected to each other via the second connecting assembly, and at least a part of the first supporting member may be detachably connected to the second supporting member. Specifically, the second connecting assembly may be disposed on the first supporting member and/or the second supporting member. For example, the second connecting assembly may comprise a third connecting member disposed on the second supporting member and a fourth connecting member disposed on the first supporting member, which are detachably connected to each other. The second connecting assembly (i.e., the third connecting member and/or the fourth connecting member) may have a flexible structure, such as a cooperating zipper structure, but the present disclosure is not limited thereto. It may also be a snap-fit structure, a slide buckle structure, Velcro, a hook-and-loop structure, etc. Specific examples of the second connecting assembly and its connection with the box body 200 will be described below in conjunction with FIG. 10.

In this embodiment, the first supporting member may be a side supporting member 211, forming two side surfaces of the body 210, such as a front side surface and a back side surface; while the second supporting member is an upper supporting member 212, forming at least a part of the top surface and other two sides (such as a left side surface and a right side surface) of the body 210.

Specifically, the side supporting member 211 may be composed of two sub-supporting members, which are connected to both sides of the upper supporting member 212 respectively via the second connecting assembly (not shown in FIG. 7, to be described in detail below). In an example, each sub-supporting member of the side supporting member 211 may have an arched side edge. Optionally, the two sub-supporting members of the side supporting member 211 may be separated from each other, or may be connected to each other via a connecting structure, and the present disclosure is not limited thereto.

In addition, the upper supporting member 212 may comprise three sheet-like members that are connected to each other, comprising a first sheet-like member 2121, a second sheet-like member 2122, and a third sheet-like member 2123. The first sheet-like member 2121 and the third sheet-like member 2123 form at least a part of other two side surfaces of the body 210, and the second sheet-like member 2122 forms a top surface of the body 210. In a specific example, the first sheet-like member 2121, the second sheet-like member 2122, and the third sheet-like member 2123 may be connected to each other by stitching or other means, and form an arched structure when connected to the side supporting member 211.

It should be noted that the terms "front" and "back" mentioned herein are relative directions based on a moving direction of the vehicle. Specifically, the "front" refers to a direction in which the vehicle is traveling when the carrier is placed on the vehicle seat, while the "back" refers to a direction opposite to the "front", that is, a direction facing a backrest of the vehicle seat when the carrier is placed on the vehicle seat.

As shown in FIG. 7, the body 210 may also be provided with a supporting structure 213, for example, at a connection of the first supporting member and the second supporting member, to provide better support for an overall structure of the body 210 and facilitate the detachable connection between the first supporting member and the second supporting member. In an example, the supporting structure 213 may be disposed at an edge of the first supporting member and/or an edge of the second supporting member, or close to an edge of the first supporting member and/or the second supporting member.

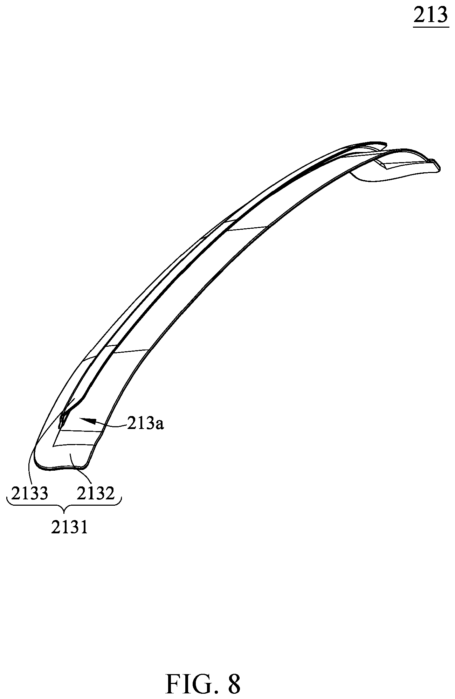

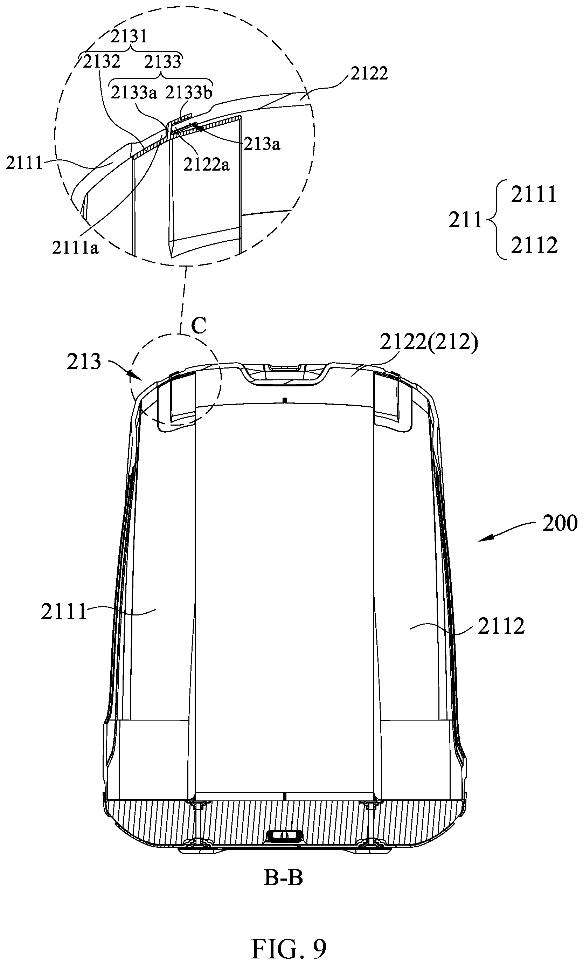

Further, FIG. 8 shows a perspective view of the supporting structure 213, and FIG. 9 shows a cross-sectional view of the carrier 2 taken along a line B-B in FIG. 7 and a partial enlarged view thereof to clearly illustrate the cross-sectional structure of the supporting structure 213. FIG. 10 shows another partial enlarged cross-sectional view of the supporting structure 213 shown in FIG. 9, which schematically illustrates the connection of the supporting structure 213 and the box body 200.

Referring to FIG. 8 and FIG. 9 in combination, the supporting structure 213 may comprise a supporting rail 2131, which is disposed between the side supporting member 211 and the upper supporting member 212, for example, connected to any sub-supporting member of the side supporting member 211 and cooperated with the corresponding side of the upper supporting member 212. Specifically, the supporting rail 2131 may extend along at least a part of the side edge of the side supporting member 211 and the corresponding part of the side edge of the upper supporting member 212. The supporting rail 2131 may form a mounting groove 213a for accommodating a part of the side supporting member 211 or a part of the upper supporting member 212, so as to support and further secure the side supporting member 211 and the upper supporting member 212.

As shown in FIG. 9, in an example, two supporting rails 2131 may be provided, which are respectively disposed on both sides of the upper supporting member 212 and cooperate with the corresponding side supporting members 211, that is, one supporting rail 2131 may be disposed between the first sub-supporting member 2111 of the side supporting member 211 and the upper supporting member 212, for example, fixedly connected to the first sub-supporting member 2111 and cooperated with the side edge of the upper supporting member 212, or fixedly connected to the side of the upper supporting member 212 and cooperated with the first sub-supporting member 2111; the other supporting rail 2131 may be disposed between the second sub-supporting member 2112 and the upper supporting member 212, for example, fixedly connected to the second sub-supporting member 2112 and cooperated with the other side edge of the upper supporting member 212, or fixedly connected to the other side of the upper supporting member 212 and cooperated with the second sub-supporting member 2112.

Although not shown in the drawings, it should be understood that the number of supporting rails 2131 may correspond to the number of second connecting assemblies, but may also be set as one, for example, disposed between any side of the upper supporting member 212 and the sub-supporting member on the side. In addition, a plurality of the supporting rails 2131 may also be disposed in different ways respectively, for example, one supporting rail 2131 is fixedly connected to the first side supporting member 2111, while the other supporting rail 2131 is fixedly connected to the other side of the upper supporting member 212. The specific structure of the supporting rail 2131 and the connection of the supporting rail 2131 with the side supporting member 211 and/or the upper supporting member 212 according to one example of this embodiment will be described in detail below in conjunction with FIG. 8 to FIG. 11C, but the present disclosure is not limited to this example.

Referring to FIG. 8 to FIG. 10 in combination, for the sake of illustration, as an example, the supporting rail 2131 is connected to the side supporting member 211 and a part of the upper supporting member 212 is accommodated in the mounting groove 213a, but it should be understood that the supporting rail 2131 may also be configured to be connected to the upper supporting member 212 and accommodate a part of the side supporting member 211.

In this embodiment, as shown in FIG. 8 and FIG. 9, the supporting rail 2131 may comprise a supporting plate 2132 and a bending part 2133 disposed on the supporting plate 2132. A mounting groove 213a is formed between the supporting plate 2132 and the bending part 2133. In an example, the supporting plate 2132 may have a shape adapted to the side edge of the side supporting member 211, for example, adapted to an upper end side edge of the side supporting member 211. The bending part 2133 may have a longitudinal section 2133a and a transverse section 2133b. The longitudinal section 2133a is configured to extend (or protrude) upward from the upper surface of the supporting plate 2132, that is, the longitudinal section 2133a may be disposed at an angle to the supporting plate 2132. Optionally, an inner surface of the longitudinal section 2133a forms a right angle or an acute angle with the supporting plate 2132, where the inner surface refers to a side facing the mounting groove 213a, and the outer surface refers to a side away from the mounting groove 213a. The transverse section 2133b is configured to extend at an angle to the longitudinal section 2133a from an upper end of the longitudinal section 2133a, thereby forming the mounting groove 213a between the upper surface of the supporting plate 2132, the inner surface of the longitudinal section 2133a, and the lower surface of the transverse section 2133b. Optionally, the transverse section 2133a is substantially parallel to the supporting plate 2132, or is adapted to a shape of the side edge of the upper supporting member 212, in which is accommodated in the mounting groove 213a, so as to provide better support.

As shown in FIG. 9, the supporting plate 2132 of the supporting rail 213 may be connected to the first sub-supporting member 2111 of the side supporting member 211, specifically configured to extend along the upper end side edge of the first sub-supporting member 2111, that is, at least corresponding to the top surface of the body 211 (i.e., the second sheet-like member 2122 of the upper supporting member 212). In an example, the supporting plate 2132 may be disposed (e.g., by adhesion, stitching, etc.) on the inner side or inner surface of the side supporting member 211 (such as the first sub-supporting member 2111 shown in FIG. 9), that is, a side of the side supporting member 211 facing an interior space of the box body 200, and the bending part 2133 may extend beyond an outer side or an outer surface of the side supporting member 211 from the upper surface of the supporting plate 2132. For example, the side edge 2111a (such as the upper end side edge) of the first sub-supporting member 2111 abuts against the outer side (specifically, the outer surface of the longitudinal section 2133a) of the bending part 2133, and the side edge 2122a of the upper supporting member 212 (such as at least its second sheet-like member 2122) corresponding to the side edge 2111a is inserted into the mounting groove 213a and optionally abuts against the inner side (specifically, the inner surface of the longitudinal section 2133a) of the bending part 2133.

Optionally, a width of the bending part 2133 may be less than a width of the supporting plate 2132. For example, a cross-section of the supporting rail 213 may be substantially h-shaped. Further, taking the position where the bending part 2133 is connected to the supporting plate 2132 as a boundary, a width of the transverse section 2133b of the bending part 2133 may be less than or equal to a width of the supporting plate 2132 on the same side as the transverse section 2133b, thereby increasing an area supporting the upper supporting member 2122, to form a better support.

Optionally, the bending part 2133 and the supporting plate 2132 may be an integral structure. Optionally or alternatively, the bending part 2133 and the supporting plate 2132 may be separated structure, that is, components separated from each other.

Optionally, the supporting rail 213 may be made of a rigid material, such as a rigid plastic, a hard cardboard, etc.

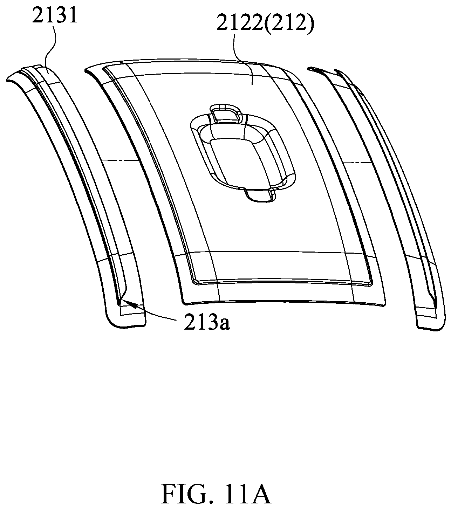

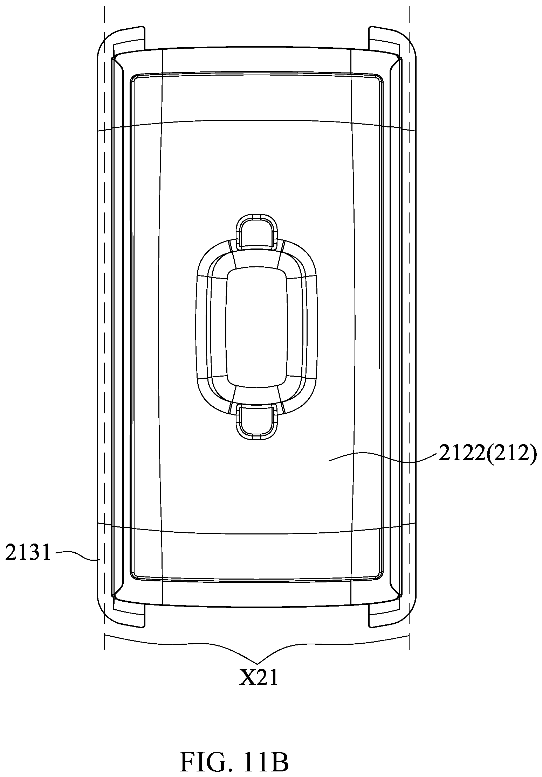

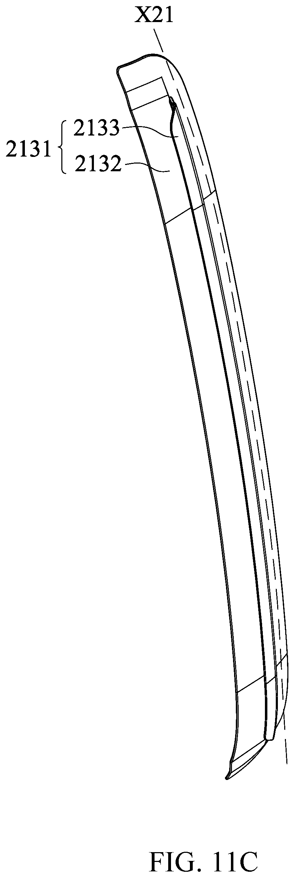

Referring to FIG. 9 to FIG. 11C, the supporting rail 2131 may be fixedly connected to the side supporting member 211, for example, by stitching (such as a first stitching line X21) or other means. FIG. 11A shows a schematic view that the supporting structure 213 is separated from the second sheet-like member 2122 of the upper supporting member 212, FIG. 11B shows a schematic view that the supporting structure 213 is connected to the second sheet-like member 2122, and FIG. 11C shows another perspective view of the supporting structure 213.

Specifically, as shown in FIG. 11A and FIG. 11B, two supporting rails 2131 are respectively disposed on both sides of the upper supporting member 212 (e.g., the second sheet-like member 2122), so that the two side edges of the upper supporting member 212 may be inserted into the mounting grooves 213a formed by the supporting rails 2131. Further referring to FIG. 10, FIG. 11B, and FIG. 11C, it can be seen that the supporting rail 2131 may be secured to the side supporting member 211 by the first stitching line X21. Specifically, the supporting plate 2132 of the supporting rail 2131 may be stitched to the side supporting member 211 (e.g., the first sub-supporting member 2111 shown in the figure) by the first stitching line X21, for example, close to the side edge of the side supporting member 211. Optionally, the first stitching line X21 may be disposed on a side of the bending part 2133 away from the upper supporting member 212. It should be understood that, although only one first stitching line X21 is shown in the figure, a plurality of first stitching lines X21 may be provided depending on specific situations (e.g., based on the length or thickness of the supporting plate 2132), and the present disclosure is not limited thereto.

More specifically, as shown in FIG. 10, as described above, the side supporting member 211 (only the first sub-supporting member 2111 is shown in the figure) and the upper supporting member 212 may be connected to each other via the second connecting assembly 202. The second connecting assembly 202 has a third connecting member 2021 and a fourth connecting member 2022 that may be detachably connected to each other. For example, to facilitate illustration, the third connecting member 2021 may be a first zipper (e.g., a male zipper), and the fourth connecting member 2022 may be a second zipper (e.g., a female zipper), which may be closed or separated from each other by a zipper pull 2023, but the present disclosure is not limited to this example. In this embodiment, the first zipper and the second zipper are arranged such that when the first zipper and the second zipper are closed to each other, the supporting rail 2131 is shielded, that is, the first zipper and the second zipper extend over a top of the bending part 2133 of the supporting rail 2131; whereas when the first zipper and the second zipper are separated from each other, at least the bending part 2133 of the supporting rail 2131 is exposed.

In this example, the first zipper may be disposed on the upper supporting member 212, while the second zipper may be disposed on the side supporting member 211. The first zipper may be fixedly connected to the first sub-supporting member 2111 by the first stitching line X21, and optionally, the first stitching line X21 may also pass through the supporting plate 2132, so as to secure the supporting rail 2131 to the first sub-supporting member 2111 simultaneously by the first stitching line X21. Certainly, the supporting rail 2131 may also be secured to the first sub-supporting member 2111 by another stitching line, and the present disclosure is not limited thereto. The second zipper may be fixedly connected to the upper supporting member 212 by the second stitching line X22. It should be noted that the second stitching line X22 does not pass through the supporting plate 2132 thereunder.

Optionally, the first stitching line X21 and the second stitching line X22 are respectively located on both sides of the bending part 2133 of the supporting rail 2131. Optionally or alternatively, the first stitching line X21 and/or the second stitching line X22 may also be provided in plural, and the present disclosure is not limited thereto.

By providing such supporting structure 213, the side edges of the side supporting member 211 and the upper supporting member 212 that are connected to each other may be supported and/or restricted by the supporting structure 213, thereby increasing the strength and stability of the connection of the side supporting member 211 and the upper supporting member 212. This can ensure the supporting effect of the box body 200 and prevent the box body 200 (especially the edges and top corners) from being collapsed, thereby making the box body 200 more aesthetic. In addition, since this supporting structure 213 may provide support for the side edges of the box body 200, the zippers at or near the side edges may not bend or curl to be pulled smoothly, thereby enhancing the user's operational experience. It should be understood that, similar to the aforementioned embodiments, the box body 210 may also be provided with a handle and/or an avoidance recess and/or a closure member, etc., and may have the same or similar structure as the aforementioned embodiments if there is no structural conflict, which will not be described again here. Furthermore, the bottom supporting member 220 of the box body 200 in this embodiment may also have a structure similar to the bottom supporting member 120 in the aforementioned embodiment, and the carrier 2 may also be secured to the vehicle seat by a securing strap assembly (e.g., the securing strap assembly 300), and the above similar structures will not be described again.

Hereinafter, another embodiment of the carrier according to the present disclosure will be described.

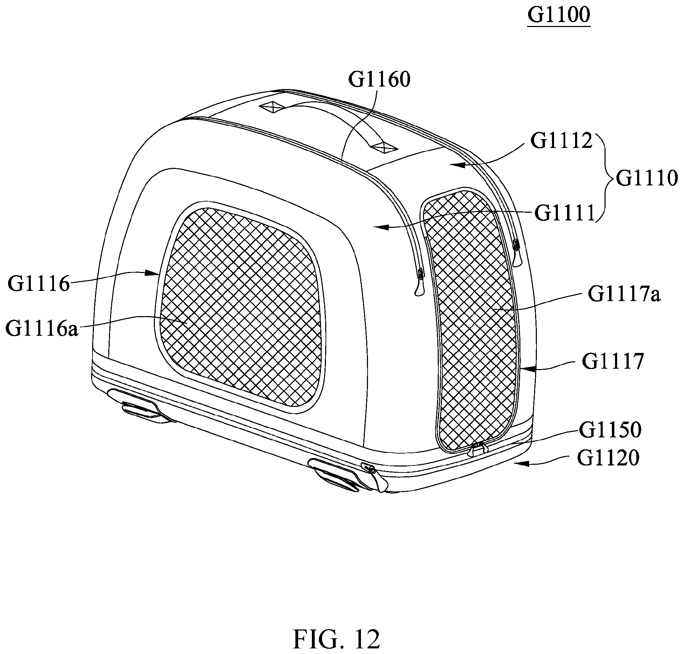

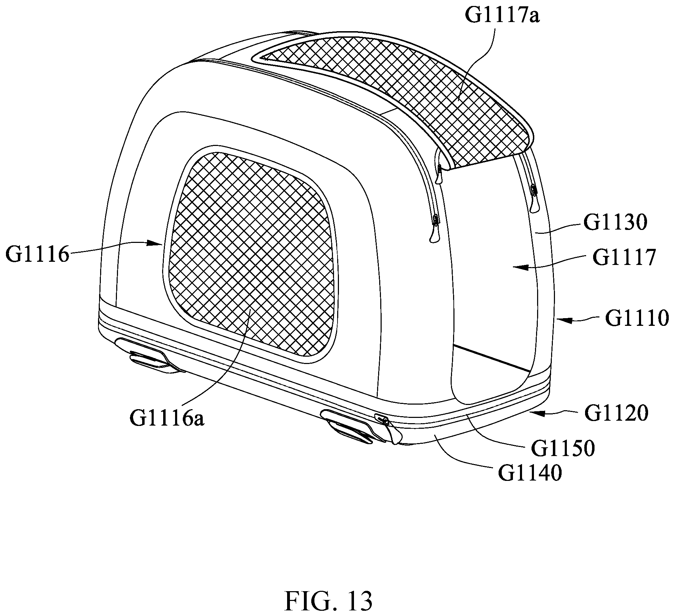

FIG. 12 shows a perspective view of the carrier G1100 according to the third embodiment of the present disclosure, and FIG. 13 shows another perspective view of the carrier G1100 shown in FIG. 12, in which a part of the second closure member G1117a is separated from the body G1110.

Referring to FIG. 12 and FIG. 13, the third embodiment of the present disclosure provides a carrier G1100, which may be secured to a vehicle seat, for example, by a securing strap assembly (not shown).

Specifically, the carrier G1100 comprises a body of a box body (hereinafter referred to as "body") G1110 and a bottom supporting member G1120. The bottom supporting member G1120 is detachably connected to the body G1110 to form a box body that provides an accommodation space together with the body G1110. The body G1110 constitutes the four side surfaces and a top surface of the carrier G1100, and the bottom supporting member G1120 constitutes a bottom of the box body. In an example, the body G1110 may be detachably connected to the bottom supporting member G1120 by at least one first connecting assembly G1150. The first connecting assembly G1150 may comprise a first connecting member disposed on the body G1110 and a second connecting member disposed on the bottom supporting member G1120, which may be a cooperating detachable structure, such as a zipper structure, a snap-fit structure, a slide buckle structure, Velcro, a hook-and-loop structure, etc.

The body G1110 may comprise a first supporting member and a second supporting member, which are at least partially detachably connected to each other, that is, at least a part of the first supporting member is detachably connected to the second supporting member. In this embodiment, the first supporting member may be a side supporting member G1111, and the second supporting member may be an upper supporting member G1112. The side supporting member G1111 forms two side surfaces of the body G1110, such as a front side surface and a back side surface. The upper supporting member G1112 forms at least a part of the top surface and other two side surfaces (such as a left side surface and a right side surface) of the body G1110. As shown in FIG. 12, at least a part of the side supporting member G1111 may be detachably connected to the upper supporting member G1112 by a second connecting assembly G1160, which may comprise a cooperating structure respectively provided on the side supporting member G1111 and the upper supporting member G1112, such as a cooperating zipper structure, a snap-fit structure, a slide buckle structure, Velcro, or a hook-and-loop structure, and may optionally be a flexible connecting structure, but the present disclosure is not limited thereto.

As shown in FIG. 12 and FIG. 13, one or more side surfaces of the body G1110 may be provided with windows for observing inside of the carrier G1100 and/or through which the pet may enter and exit the carrier G1100. In this embodiment, the windows comprise a first window G1116 and/or a second window G1117. The first window G1116 is disposed on the side supporting member G1111. The second window G1117 is at least disposed on the upper supporting member G1112, for example, on the part of the upper supporting member G1112 forming the left side surface and/or the right side surface of the body G1110. Optionally, the second window G1117 may also extend through a part of the bottom supporting member G1120 from the upper supporting member G1112.

In an example, a first window G1116 may be respectively disposed on the front side surface and the back side surface of the body G1110 (i.e., corresponding to the two side supporting members G1111 of the body G1110). The two first windows G1116 may be correspondingly disposed, for example, each of the two first windows is disposed at a central position of the corresponding side supporting member G1111. The first window G1116 may have a trapezoidal shape, but the present disclosure is not limited thereto, and it may also have shapes such as rectangular, circular, elliptical, etc. Optionally, the two first windows G1116 have the same size and/or shape. Optionally or alternatively, the two first windows G1116 may have different sizes and/or shapes, for example, the size of the first window G1116 on the back side surface may be larger than that of the first window G1116 on the front side surface to increase the ventilation area, thereby enhancing breathability of the back side surface of the carrier G1100 (i.e., the side close to or in contact with the backrest of the vehicle seat). However, the present disclosure is not limited thereto, and the carrier G1100 may also have only one first window G1116, for example, when the carrier G1100 is placed on the vehicle seat, the first window G1116 is located on a side of the carrier G1100 away from the backrest of the vehicle seat.

Similarly, the left side surface and the back side surface of the carrier G1100 may also respectively have a second window G1117, and the two second windows G1117 may have the same or different shapes and/or sizes. Alternatively, the carrier G1100 may have only one second window G1117, for example, on the left side surface or the back side surface, more specifically, on a side of the carrier G1100 close to a vehicle door.

Furthermore, the first window G1116 may be provided with a first closure member G1116a for closing and/or shielding the first window G1116. In this embodiment, the first closure member G1116a may be a covering that is at least partially detachably or fixedly connected to the first window G1116. In an example, the first closure member 1116a may have transparent and/or breathable materials, such as a mesh structure.

Optionally or additionally, the second window G1117 may be provided with a second closure member G1117a for closing and/or shielding the second window G1117. In this embodiment, at least a part of the second closure member G1117a is detachably connected to the body G1110. For example, as shown in FIG. 13, an upper end of the second closure member G1117a may be fixedly connected to the body G1110, while other parts of the second closure member are detachably connected to the body G1110, so that the second closure member G1117a may open upwards relative to the second window G1117, that is, the second closure member G1117a may be lifted upwards to facilitate the pet entering and exiting. In an example, the second closure member G1117a may have transparent and/or breathable materials, or may have light-shielding materials. The second closure member G1117a may have flexible or rigid materials and may be detachably connected to the second window G1117 by a flexible or rigid connecting structure. For example, the second closure member G1117a is a breathable mesh fabric or a flexible mesh material.

In addition, as shown in FIG. 13, the body G1110 and/or the bottom supporting member G1120 of the carrier G1100 are externally covered with a covering member, which may comprise at least one of fabric, plastic, and PE, and the present disclosure is not limited thereto. For example, the covering member may comprise a body covering member G1130 covering an outside of the body G1110 and a bottom covering member G1140 covering an outside of the bottom supporting member G1120. The body covering member G1130 and the bottom covering member G1140 are detachably connected, for example, by the first connecting assembly G1150 (such as a zipper structure, Velcro, or a hook-and-loop component). In a specific example, at least a part of the first closure member G1116a and/or at least a part of the second closure member G1117a may be fixedly connected to the covering member, or may be integrally formed with the covering member (for example, having the same material as the covering member). The present disclosure is not limited to the above embodiments, and the materials and/or the connection of the first closure member and/or the second closure member may be interchanged or varied.

It should be noted that the terms "front", "back", "left" and "right" used in the present disclosure are based on a direction of the carrier (as shown by a reference numeral "G1100") placed on a vehicle seat. Specifically, the "front" direction refers to a direction away from the backrest of the vehicle seat, which is also a direction where the vehicle is travelling in this embodiment. The "back" direction refers to a direction towards or against the backrest of the vehicle seat. The "left" and "right" directions refer to the two lateral directions when viewed from the front side of the carrier.

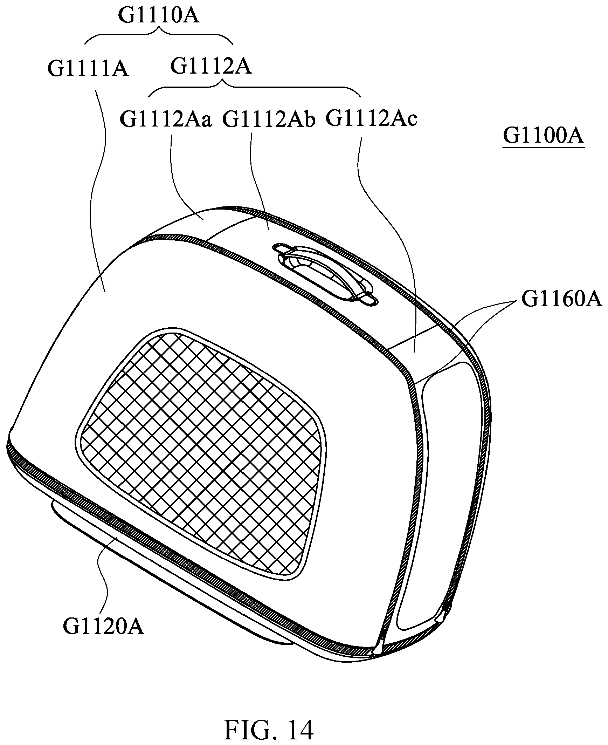

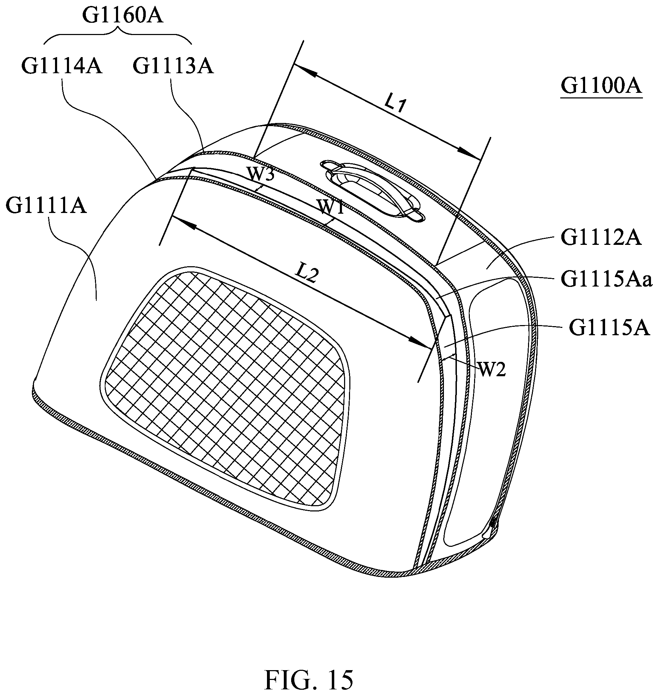

FIG. 14 shows a perspective view of a carrier G1100A according to a fourth embodiment of the present disclosure, and FIG. 15 shows another perspective view of the carrier G1100A shown in FIG. 14, specifically with the body G1110A in another state. FIG. 15 illustrates that one side supporting member G1111A of the body G1110A is in a separated state from the upper supporting member G1112A.

As shown in FIG. 14 and FIG. 15, the fourth embodiment of the present disclosure provides a carrier G1100A. The carrier G1100A comprises a body G1110A and a bottom supporting member G1120A, which are detachably connected to each other. The body G1110A constitutes four side surfaces and a top surface of the carrier G1100A, while the bottom supporting member G1120A constitutes a bottom of the carrier G1100A. Further, the body G1110A may comprise a first supporting member and a second supporting member that are at least partially detachably connected via a second connecting assembly G1160A. In an example, the second connecting assembly G1160A may comprise a third connecting member G1113A and a fourth connecting member G1114A that are detachably connected to each other. The third connecting member G1113A may be provided on one of the first supporting member and the second supporting member, while the fourth connecting member G1114A may be provided on the other of the first supporting member and the second supporting member.

In this embodiment, the first supporting member may be a side supporting member G1111A, forming two side surfaces of the body G1110A, such as a front side surface and a back side surface. The second supporting member may be an upper supporting member G1112A, forming at least a part of other two side surfaces and the top surface the body G1110A, such as a left side surface and a right side surface. Specifically, the side supporting member G1111A may comprise two sub-supporting members, which are connected to both sides of the upper supporting member G1112A via the second connecting assembly G1160A. The upper supporting member G1112A may comprise three sheet-like members that are connected to each other and form an arch when connected to the side supporting member G1111A. The upper supporting member G1112A may comprise a first sheet-like member G1112Aa, a second sheet-like member G1112Ab, and a third sheet-like member G1112Ac. The first sheet-like member G1112Aa and the third sheet-like member G1112Ac form at least a part of other two side surfaces of the body G1110A, while the second sheet-like member G1112Ab forms a top surface of the body G1110A. In an example, the first sheet-like member G1112Aa, the second sheet-like member G1112Ab, and the third sheet-like member G1112Ac are fixedly connected to each other by stitching or other means.

As shown in FIG. 15, the body G1110A may also be provided with an anti-collision supporting structure G1115A (also referred to as a "supporting structure"), for example, at a connection of the first supporting member and the second supporting member. Specifically, the anti-collision supporting structure G1115A may be disposed at an edge of the first supporting member and/or an edge of the second supporting member. In an example, the anti-collision supporting structure G1115A is configured to extend along at least a part of the edge of the first supporting member and protrude outward (that is, towards the second supporting member) to abut against the second supporting member when the first supporting member and the second supporting member are connected to each other. It should be noted that when the first supporting member and the second supporting member are connected to each other via the second connecting assembly G1160A, the anti-collision supporting structure G1115A is located on an inner side of the second connecting assembly G1160A, that is, it is invisible from the outside of the body G1110A, so as to be able to abut against the second supporting member on the inner side of the carrier G1100A.

In this embodiment, the anti-collision supporting structure G1115A is at least disposed at a top of the side supporting member G1111A to abut against the upper supporting member G1112A when the side supporting member G1111A and the upper supporting member G1112A are connected to each other. This allows the carrier G1100A to provide better anti-collision performance when subjected to impact, reducing the deformation after impact and enhancing the anti-collision performance, thereby better protecting the pet carried inside the carrier G1100A. In addition, the anti-collision supporting structure G1115A may also provide support for the overall carrier G1100A, preventing the appearance of the carrier G1100A from being collapsed, making the carrier G1100A more aesthetic and having high quality. Moreover, since this anti-collision supporting structure G1115A can provide support for the edge (such as the upper edge) of the carrier G1100A, the zippers disposed at or near the side edge may not bend or curl to be pulled smoothly, thereby enhancing the user's operational experience.

Further, as shown in FIG. 15, the anti-collision supporting structure G1115A is disposed at an upper edge of the side supporting member G1111A, that is, extends along the edge corresponding to the side edge of the upper supporting member G1112A. Optionally, a width W1 of the anti-collision supporting structure G1115A at the top of the body G1110A (that is, the top edge of the body G1110A) may be equal to a width W2 of the anti-collision supporting structure G1115A at the sides of the body G1110A (i.e., a left edge and a right edge of the body G1110A). Further, the anti-collision supporting structure G1115A may have a constant width; however, the present disclosure is not limited thereto, and the width W1 of the anti-collision supporting structure G1115A at the top of the body G1110A may also be less than or greater than the width W2 of the anti-collision supporting structure G1115A at the sides of the body G1110A.

In an example, an accommodating groove G1115Aa may be provided on the anti-collision supporting structure G1115A to accommodate at least a part of the side edge of the upper supporting member G1112A, to assist the connection of the second connecting assembly G1160A, such as a zipper, and to accommodate the second connecting assembly G1160A therein. Specifically, a width W3 and a depth of the accommodating groove G1115Aa may be set to at least accommodate the second connecting assembly G1160A, to prevent the top of the carrier G1100A from tilting or protruding when the two connecting members of the second connecting assembly G1160A are connected to each other, to make the connection between the side supporting member G1111A and the upper supporting member G1112A flat. The width W3 of the accommodating groove G1115Aa is greater than the width of the second connecting assembly G1160A and less than the width W1 and width W2 of the anti-collision supporting structure G1115A.

As shown in FIG. 15, the accommodating groove G1115Aa may be disposed at a position on the anti-collision supporting structure G1115A corresponding to the top of the body G1110A, for example, at least corresponding to the side edge of the second sheet-like member G1112Ab of the upper supporting member G1112A. In an example, a length L1 of the second sheet-like member G1112Ab of the upper supporting member G1112A is less than a length L2 of the accommodating groove G1115Aa. Additionally, the accommodating groove G1115Aa may have a same or similar structure with the structure of the second sheet-like member G1112Ab and/or the second connecting assembly G1160A. For example, if the edge of the second sheet-like member G1112Ab is curved, the accommodating groove G1115Aa may also be curved to allow for a tight fit between the side supporting member G1111A and the upper supporting member G1112A.

Furthermore, the carrier in this embodiment may also have a structure similar to that described in the third embodiment. For example, one or more side surfaces of the body G1110A may also have windows, such as a first window on the side supporting member G1111A, and/or a second window on the first sheet-like member G1112Aa and/or the third sheet-like member G1112Ac of the upper supporting member G1112A. The windows are correspondingly provided with closure members, such as a first closure member and/or a second closure member. The specific structures of these components may be referred to the third embodiment and are not described again here.

Although preferred embodiments have been illustrated and described above, the present disclosure is not limited to the specific embodiments described. Various modifications and variations can be made by those skilled in the art without departing from the spirit and scope of the appended claims. It should be noted that such modifications and variations should not be considered as exceeding the technical spirit and scope of the present disclosure.

## Claims

1. A carrier, comprising a box body, **characterized in that** the box body comprises a body and a bottom supporting member, the body is disposed on and covers the bottom supporting member,
wherein the body comprises a first supporting member and a second supporting member connected to each other, and a supporting structure is disposed at a connection between the first supporting member and the second supporting member.

2. The carrier according to claim 1, **characterized in that** the supporting structure is configured to
extend along at least a part of an edge of the first supporting member and protrude outward to abut against the second supporting member when the first supporting member and the second supporting member are connected to each other; or
extend along at least a part of an edge of the second supporting member and protrude outward to abut against the first supporting member when the first supporting member and the second supporting member are connected to each other.

3. The carrier according to claim 1, **characterized in that**
the first supporting member is a side supporting member, forming two side surfaces of the body; and
the second supporting member is an upper supporting member, forming at least a part of other two side surfaces and a top surface of the body, wherein the supporting structure is at least disposed at a top corner of the side supporting member to abut against the upper supporting member when the side supporting member and the upper supporting member are connected to each other.

4. The carrier according to claim 3, **characterized in that** the supporting structure is configured to extend from the top corner of the side supporting member to a lower edge of the side supporting member.

5. The carrier according to claim 3 or 4, **characterized in that** the supporting structure comprises a supporting protrusion, the supporting protrusion is located at the top corner of the side supporting member, wherein a width of the supporting protrusion is greater than a width of other parts of the supporting structure.

6. The carrier according to any one of claims 1 to 4, **characterized in that** the supporting structure is integrally formed with the first supporting member and/or the second supporting member.

7. The carrier according to claim 1, **characterized in that**
the supporting structure comprises a supporting rail, the supporting rail is connected to the first supporting member or the second supporting member, and forms a mounting groove for accommodating a part of the second supporting member or a part of the first supporting member.

8. The carrier according to claim 7, **characterized in that**
the supporting rail extends along at least a part of a side edge of the first supporting member and a corresponding part of a side edge of the second supporting member.

9. The carrier according to claim 7, **characterized in that**
the supporting rail comprises a supporting plate and a bending part disposed on the supporting plate, and the mounting groove is formed between the supporting plate and the bending part.

10. The carrier according to claim 9, **characterized in that**
the supporting rail is fixedly connected to the first supporting member, the side edge of the first supporting member abuts against an outer side of the bending part, and at least a part of the side edge of the second supporting member is inserted into the mounting groove; or
the supporting rail is fixedly connected to the second supporting member, the side edge of the second supporting member abuts against an outer side of the bending part, and at least a part of the side edge of the first supporting member is inserted into the mounting groove.

11. The carrier according to claim 9, **characterized in that**
the first supporting member is a side supporting member, forming two side surfaces of the body;
the second supporting member is an upper supporting member, comprising a first sheet-like member, a third sheet-like member, and a second sheet-like member located between the first sheet-like member and the third sheet-like member, which respectively form at least a part of other two side surfaces and a top surface of the body,
wherein when the supporting rail is fixedly connected to the side supporting member, a side edge of at least the second sheet-like member of the upper supporting member is inserted into the mounting groove, and a side edge of the side supporting member corresponding to the supporting rail abuts against an outer side of the bending part; or
when the supporting rail is fixedly connected to the upper supporting member, a side edge of the side supporting member at least corresponding to the second sheet-like member is inserted into the mounting groove, and a side edge of at least the second sheet-like member of the upper supporting member abuts against an outer side of the bending part.

12. The carrier according to any one of claims 9 to 11, **characterized in that**
the bending part comprises a longitudinal section and a transverse section, the longitudinal section is configured to extend upward from an upper surface of the supporting plate, and the transverse section is configured to extend at an angle to the longitudinal section from an upper end of the longitudinal section.

13. The carrier according to any one of claims 9 to 11, **characterized in that** a width of the bending part is less than a width of the supporting plate.

14. The carrier according to any one of claims 9 to 11, **characterized in that** the bending part and the supporting plate are an integral structure or a separate structure.

15. The carrier according to any one of claims 7 to 11, **characterized in that**
the supporting rail has a cross section in a h shape, and/or
the supporting rail is made of a rigid material.

16. The carrier according to claim 1, wherein
the first supporting member is a side supporting member, forming two side surfaces of the body; and
the second supporting member is an upper supporting member, forming at least a part of other two side surfaces and a top surface of the body,
the supporting structure extends along at least a part of an edge of the side supporting member and protrudes towards the upper supporting member,
wherein a width of the supporting structure at a top of the body is equal to a width of the supporting structure at the two sides of the body.

17. The carrier according to claim 16, wherein the supporting structure is provided with an accommodating groove for accommodating at least a part of a side edge of the upper supporting member.
